# DEMANDE DE BREVET EUROPEEN

(11) **EP 1 093 841 A1**
(43) Date de publication de la demande: **25.04.2001**
(21) Numéro de dépôt: 99440280.8
(22) Date de dépôt: 21.10.1999
(51) Int. Cl.: B01D 53/22, F28D 7/00, F24F 3/147, B01D 63/00, F28D 9/00

(54) **Echangeur massique et thermique**

(71) Demandeur: Restle, Claude, 93400 Saint Ouen (FR)
(72) Inventeur: Restle, Claude, 93400 Saint Ouen (FR)
(74) Mandataire: Littolff, Denis

(57) **Abrégé**

Echangeur massique et thermique entre deux phases gazeuses de température et d'humidité différentes, une première phase froide et peu humide et une seconde phase chaude et humide, permettant le réchauffement et l'humidification de ladite première phase, et à l'inverse le refroidissement et l'assèchement de la seconde phases dans un compartiment (6) dans lequel les flux gazeux correspondant auxdites phases circulent en étant séparés par des parois (10) poreuses réalisant l'échange de chaleur total, caractérisé en ce que le compartiment (6) comporte au moins deux zones d'échange massique et thermique dans lesquelles des conduits (2,10) véhiculant les phases gazeuses sont orientés perpendiculairement, les flux y circulant en sens inverse de sorte que le dernier échange de chacune des phases s'effectue au niveau du premier échange de l'autre phase.

## Description

La présente invention concerne un échangeur massique et thermique entre deux phases de température et d'humidité différentes, une première phase froide et peu humide et une seconde phase chaude et humide. Le but est bien entendu de réchauffer et d'humidifier la première phase, et de refroidir et d'assécher la seconde phase via l'échange thermique et massique permis par l'échangeur.

A cet effet, les flux gazeux circulent dans un compartiment dans lequel ils sont toujours séparés par des parois poreuses au travers desquelles se fait l'échange. Une telle configuration, utilisée avec les mêmes objectifs, est déjà connue et par exemple décrite dans le document FR-A-2 609 413. La structure divulguée dans ce brevet permet aux deux phases gazeuses de se déplacer en sens inverse l'une de l'autre le long d'une unique paroi de séparation : le traitement s'effectue par conséquent en une étape, même si la description fait état de procédés à deux étages, lesquels utilisent en fait à deux reprises la structure simple mentionnée.

L'un des domaines d'application les plus importants de cette technologie est constitué des chaufferies avec chaudières à gaz assurant par exemple le chauffage et la production d'eau chaude sanitaire pour des ensembles de logements ou de bureaux, ainsi que des turbines et moteurs à gaz ou GPL.

En vue d'en augmenter le rendement, les installations de ce type peuvent être équipées de tels échangeurs, qui réchauffent et humidifient l'air comburant grâce à l'air de combustion, lui-même préalablement saturé en humidité par un condenseur. Grâce à la basse température de l'air comburant (aux alentours de 5 à 200° C) avant traitement, un niveau de condensation maximal est atteint. La saturation de l'air comburant permet ensuite une combustion dans la chaudière à une température plus faible, conduisant à un meilleur rendement et réduisant le taux d'oxyde d'azote produit lors de ladite combustion (combustion humide).

L'adjonction d'un échangeur selon l'invention permet par conséquent d'aboutir à un rendement de fonctionnement de la chaufferie globalement supérieur, tout en préservant l'environnement grâce à la réduction de l'émission d'oxyde d'azote.

Les échangeurs existants, tels que décrits dans l'art antérieur et qui équipent parfois déjà des chaufferies, ne sont cependant pas totalement fiables, et leur tenue mécanique laisse souvent à désirer avec le temps. L'objectif majeur de la présente invention est donc de proposer une configuration optimisée, à la fois dans le choix des matériaux et dans la conception même du dispositif, en vue d'obtenir un rendement bien supérieur à ceux que l'on a atteints jusqu'ici, avec une fiabilité mécanique considérablement accrue.

L'un des axes d'optimisation sur lequel la réflexion a porté se situe au niveau de la géométrie du système, et de la gestion des trajets des flux gazeux, pour tenter d'obtenir un échange massique et thermique à haut rendement.

Ainsi, le compartiment dans lequel s'effectue les échanges gazeux comporte, selon l'invention, au moins deux zones d'échange massique et thermique dans lesquelles les conduits véhiculant les phases gazeuses sont orientés perpendiculairement, les flux y circulant en outre en sens inverse de sorte que le dernier échange de chacune des phases s'effectue au niveau du premier échange de l'autre phase (principe du contre-courant).

Cette définition permet d'élaborer un certain nombre de configurations et, de préférence, chaque conduit véhiculant une phase gazeuse comporte plus précisément au moins deux tronçons parallèles.

Si l'on s'en tient au seuil inférieur de deux tronçons par conduit, la configuration de chacun des conduits est nécessairement en U. On obtient alors une géométrie comprenant deux U perpendiculaires et entrecroisés.

Des essais systématiques ont cependant montré que la configuration préférentielle du système, qui procure le rendement maximal, comporte des conduits à trois tronçons parallèles, ce qui complique un peu la structure visuelle qui devient un réseau ou une matrice 3 x 3.

Un second axe de travail pour optimiser le fonctionnement de l'échangeur a consisté à rechercher le meilleur mode d'échange possible, notamment en multipliant les parois poreuses séparant les flux gazeux.

Selon l'invention, le flux gazeux le plus froid est véhiculé dans des conduites traversées par une pluralité de tubulures poreuses, parallèles entre elles, véhiculant le flux le plus chaud, lesdites tubulures n'étant bien entendu pas au contact l'une de l'autre.

Un troisième axe de recherche a concerné les matériaux dans lesquels les éléments constitutifs de l'échangeur sont réalisés.

Ainsi, de préférence, les matériaux utilisés sont des céramiques d'oxyde d'alumine, de carbure et de nitrure métallique. Selon des exemples possibles, les matériaux appropriés peuvent être basés sur de l'alumine Al₂O₃, du carbure de silicium SiC, ou plus généralement en métal fritté poreux.

La céramique est composée en granulométrie de grains fins de 0,05 à 5 microns et de préférence de 1 à 2 microns et de grains plus gros qui composent le "squelette" de granulométrie de 5 à 100 microns, et de préférence de 15 à 30 microns. On obtient alors des rayons de pores compris entre 1 et 15 microns et, de façon préférentielle, entre 2 et 8 microns.

La porosité résultante de la céramique est comprise entre 15 et 60 cm³/gr et de préférence dans une fourchette plus restreinte allant de 35 à 50 cm³/gr.

Dans l'optique générale d'améliorer les performances de l'échangeur de l'invention, tous les composants, éléments ou groupes de composants, en eux-mêmes ou dans leurs relations les uns avec les autres, ont été systématiquement passés en revue afin de déterminer, selon les axes précités, quelle(s) amélioration(s) y apporter.

Dans cette optique, pour améliorer les échanges entre phases au niveau des parois tubulaires, chaque tubulure poreuse est équipée d'un dispositif (insert ou turbulateur) permettant de plaquer la phase gazeuse en circulation contre les parois de la tubulure.

De préférence, ledit dispositif est constitué d'une vis sans fin équipant les tronçons rectilignes des tubulures.

De préférence encore, lesdites vis sans fin sont en acier inoxydable.

L'existence de la vis sans fin permet non seulement de plaquer le flux gazeux véhiculé par les tubulures contre les parois de ces dernières, mais encore de guider ledit flux sur un trajet très supérieur à la longueur de chaque tubulure, en suivant en fait la paroi externe avec une vitesse de circulation importante.

Selon une configuration préférentielle, l'épaisseur des parois des tubulures est égale à au moins 5 mm. Au redémarrage d'une chaudière, l'inertie est certes plus grande, mais cette épaisseur garantit le maintien de l'humidification des pores, et par suite un échange correct entre les deux flux dès le début sans nécessité d'adjoindre un humidificateur fonctionnant lorsque la chaudière est arrêtée.

Dans la configuration développée, selon un exemple possible, le diamètre moyen extérieur des tubulures est de 45 mm, leur diamètre moyen intérieur est de 35 mm, et la flèche maximale autorisée est de 3 mm. Ces dimensions sont bien entendu prévues pour que le transfert de masse et de température s'effectue dans de bonnes conditions. Elles sont également tributaires de contraintes mécaniques : compte tenu du matériau particulier employé pour la fabrication des tubulures, il va sans dire que le choix de l'épaisseur dépend du procédé de fabrication, induisant une tenue mécanique spécifique, notamment fonction de la longueur désirée.

Selon une possibilité, l'entrée du conduit véhiculant la phase froide et peu humide est munie d'un filtre et/ou d'une grille.

Cette entrée concerne l'air comburant destiné à alimenter la chaudière. Cet air est de l'air extérieure ou ambiant, qui peut être chargé de poussière, voire de particules ou d'éléments plus volumineux indésirables (feuilles mortes, papiers, ...), d'où l'emploi d'un filtre et éventuellement d'une grille filtrant ces derniers éléments surfaciquement plus importants.

Plus précisément, le compartiment est constitué d'un bâti parallélépipédique divisé en n portions rectilignes de section sensiblement égale par des cloisons internes laissant subsister un passage entre les conduits adjacents, localisé alternativement à l'une et l'autre des extrémités desdites cloisons, ledit bâti comportant des ouvertures, aux extrémités opposées audits passages, dans les deux portions rectilignes latérales, pour l'entrée et la sortie d'une phase gazeuse. L'ensemble constitue le conduit véhiculant la phase gazeuse froide et peu humide.

Le conduit de la phase gazeuse la plus froide est donc directement intégré au bâti du compartiment, et délimité par une succession de couloirs parallèles séparés par les cloisons.

Les tubulures rectilignes sont fixées dans les cloisons internes, les tubulures de deux faisceaux rectilignes parallèles adjacents étant raccordées par des pièces en U démontables, réalisées de préférence en PVC.

Le faisceau desdites tubulures a donc une forme générale similaire à celle du conduit de la phase froide, mais orienté perpendiculairement et inclus dans ledit conduit.

Pour améliorer les possibilités de maintenance, l'échangeur de l'invention se caractérise par une large démontabilité. Ainsi, le bâti comporte un couvercle permettant le démontage des tubulures. De plus, le démontage des pièces en U en PVC permet un accès facile à l'intérieur des tubulures. Pour démonter lesdits faisceaux, il suffit enfin d'enlever les cloisons internes dans lesquelles sont fixées individuellement les tubulures.

Dans l'application préférentielle à des chaufferies, le système de l'invention fonctionne avec une première phase gazeuse constituée d'air sec et froid, à environ 10 à 20° C avec de l'ordre de 4 à 5 g de vapeur d'eau par Nm³. La seconde phase gazeuse a une température de l'ordre de 60° C et elle est saturée en humidité.

De préférence, la vitesse du flux de la première phase gazeuse est comprise entre 2 et 5 m/s pour les fumées, et la vitesse du flux de la seconde phase gazeuse est comprise entre 3 et 10 m/s.

Dans ladite application, comme on l'a mentionné, l'échangeur de l'invention est couplé avec une chaudière, l'air comburant correspondant alors à la première phase gazeuse en sortie de l'échangeur. La seconde phase gazeuse est constituée des fumées obtenues en sortie de la chaudière, saturées d'humidité via un condenseur.

Le dimensionnement des différentes parties de l'échangeur dépend bien entendu de la puissance mise en oeuvre. A titre d'exemple, pour une chaudière de 1MW, on prévoit 56 tubulures poreuses ayant une longueur d'environ 82 cm environ.

Pour des puissances différentes, dans la mesure du possible, les dimensions des tubulures, qui constituent un élément dont la fabrication est très technique et dont les caractéristiques dimensionnelles ne sont pas forcément susceptibles de s'adapter à toutes les configurations, sont souvent conservées. C'est le nombre qui change en fonction de la puissance.

L'invention va à présent être décrite plus en détail, en référence aux dessins annexés, pour lesquels :
- la figure 1 est un schéma de l'invention dans son application à une chaudière ;
- la figure 2 est une vue en perspective schématique d'un échangeur ayant une configuration correspondant à l'invention ; et
- la figure 3 est une courbe de formation de l'oxyde d'azote en fonction de la température de l'air comburant saturé de vapeur d'eau.

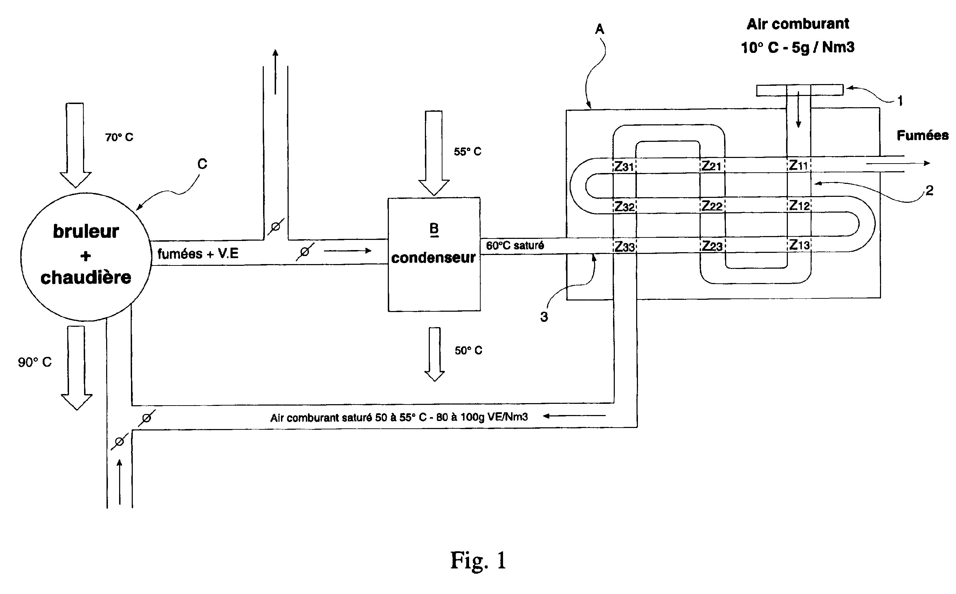

La figure 1 présente un schéma de l'ensemble d'une installation de chaufferie, incluant la chaudière proprement dite (C), un condenseur (B) saturant les fumées produites, ainsi que l'échangeur (A) de l'invention.

A l'entrée de l'air comburant, une grille et un filtre (1) permettent d'empêcher l'entrée du dispositif à toutes les impuretés indésirables. Ledit filtre, disposé horizontalement, a un fonctionnement par gravité, et peut notamment permettre de réduire la périodicité du nettoyage de l'échangeur. Les déchets de surface non négligeables sont arrêtés par la grille, alors que le filtre se charge des éléments particulaires plus petits.

La configuration présentée en figure 1, à trois tronçons parallèles par conduit, aboutit à une géométrie à neuf zones d'échange référencées de façon matricielle Z₁₁ à Z₃₃, dont les essais ont montré qu'elle conduit au meilleur rendement ou pincement possible. Sur le schéma, le conduit (2) de l'air comburant, initialement froid et sec, se développe principalement verticalement. Le conduit (3) des fumées produites se développe à l'inverse plutôt horizontalement. Dans la réalité, les deux flux travaillent dans le plan horizontal ou vertical.

Chaque trajet comporte cependant nécessairement des parties ou zones reliant les tronçons parallèles, au nombre de deux et d'allure perpendiculaire au reste.

Le fonctionnement est le suivant : l'air comburant à l'entrée présente une température avoisinant 10° C, et l'humidité initiale est d'environ 5 g de vapeur d'eau par Nm³. A l'issue des passages dans les zones d'échange Z₁₁ à Z₃₃, la température de l'air comburant s'est élevée jusqu'à environ 50 à 55° C, avec un taux d'humidité allant jusqu'à 80 g à 100 g de vapeur d'eau par Nm³.

Ces caractéristiques sont particulièrement appropriées pour faire fonctionner la chaudière avec un haut rendement, et préservent au surplus l'environnement puisque le taux d'oxyde d'azote produit est fortement réduit, comme on le verra en détail dans la suite.

La seconde phase gazeuse provient des fumées produites par la chaudière (C). Celles-ci, qui sortent de la chaudière (C) à une température généralement comprise entre 130° C et 170° C, ne sont pas utilisables en l'état. Elles passent par un condenseur (B) dont l'autre phase est constituée du retour d'eau du circuit d'eau chaude de chauffage.

La température des fumées est abaissée par ledit condenseur (B) à une valeur d'environ 60° C, pour un taux d'humidité d'approximativement 150 g de vapeur d'eau par Nm³. Il s'agit donc d'air chaud saturé en humidité.

La température de l'eau chaude sanitaire respectivement à l'entrée et à la sortie de la chaudière apparaissent sur le schéma : la chaudière réchauffe cette eau d'environ 20° C, la faisant passer d'approximativement 70° à 90° C.

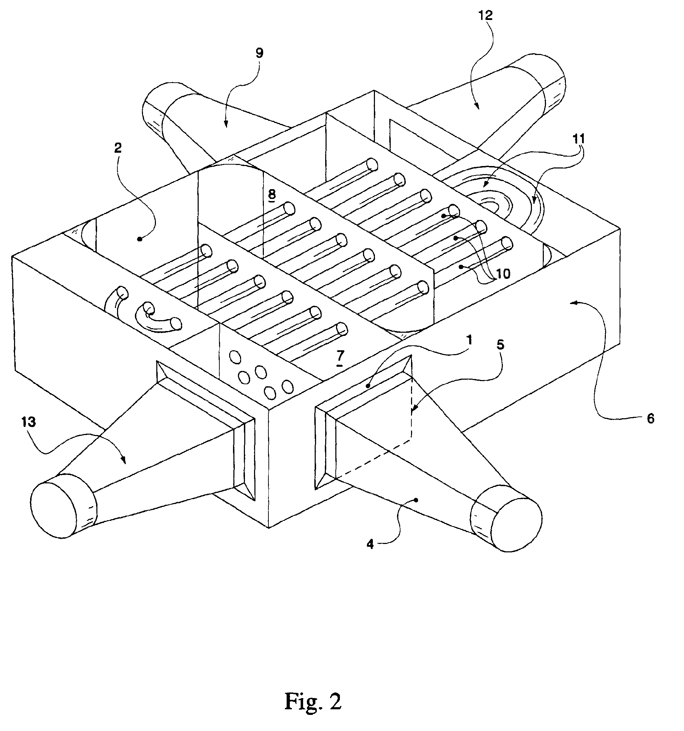

Une configuration possible, bien que toujours schématisée, de l'échangeur apparaît en figure 2. L'air ambiant arrive au niveau du filtre (1), via un conduit externe (4) optionnel. Cet air débouche via l'orifice (5) dans le conduit (2) de la première phase, en réalité délimité par le bâti (6) du compartiment de l'échangeur et par les deux cloisons internes (7, 8). Les parois extérieures dudit bâti (6) et lesdites cloisons (7, 8) définissent une chicane dans laquelle se déplace le flux de la première phase gazeuse en direction du conduit de sortie (9), lequel relie l'échangeur de l'invention à la chaudière (C). Le bâti (6) est de préférence calorifugé, ainsi que le couvercle qui le referme (non représenté).

Sur le passage d'air ambiant, des faisceaux de tubulures (10) forment le conduit (3) de la seconde phase gazeuse. Ces tubulures, dont seulement un petit nombre est représenté pour ne pas alourdir la figure, sont réalisées en céramique d'oxyde d'alumine pure ou autre, par exemple de carbure ou nitrure d'oxyde métallique à granulométrie et porosité tels que mentionnés auparavant. Comme on l'a déjà mentionné, le rayon des pores est préférentiellement compris entre 2 et 8 µm. L'épaisseur des tubes est enfin de l'ordre de 5 mm, pour un diamètre interne d'environ 35 mm.

Dans cette configuration, la vitesse de l'air comburant autour des tubulures est comprise entre 2 et 5 m/s, alors que les fumées sont véhiculées dans lesdites tubulures (10) à une vitesse comprise entre 3 et 10 m/s.

Il est clair que la structure représentée occasionne de fortes pertes de charges, qui sont évidemment nécessaires pour que le rendement du transfert massique et thermique soit le meilleur possible.

Les tubulures rectilignes sont raccordées par des connexions (11) en U, de préférence réalisées en PVC, démontables pour faciliter l'accès à l'intérieur des tubulures (10) munies de leurs dispositifs pour plaquer les fumées contre leurs parois, en l'occurrence une vis sans fin métallique (non représentée).

Les fumées se déplacent entre une conduite (12) d'entrée reliant l'échangeur au condenseur (B), et une conduite de sortie (13) optionnelle les évacuant.

Les flux des deux phases gazeuses, perpendiculaires dans la majeure partie de leurs trajets respectifs, conduisent à un pincement (Δt entre les deux phases) ou à un rendement optimal. Selon les résultats des essais effectués, les transferts de chaleur sensible et de chaleur latente s'avèrent excellents dans cette configuration.

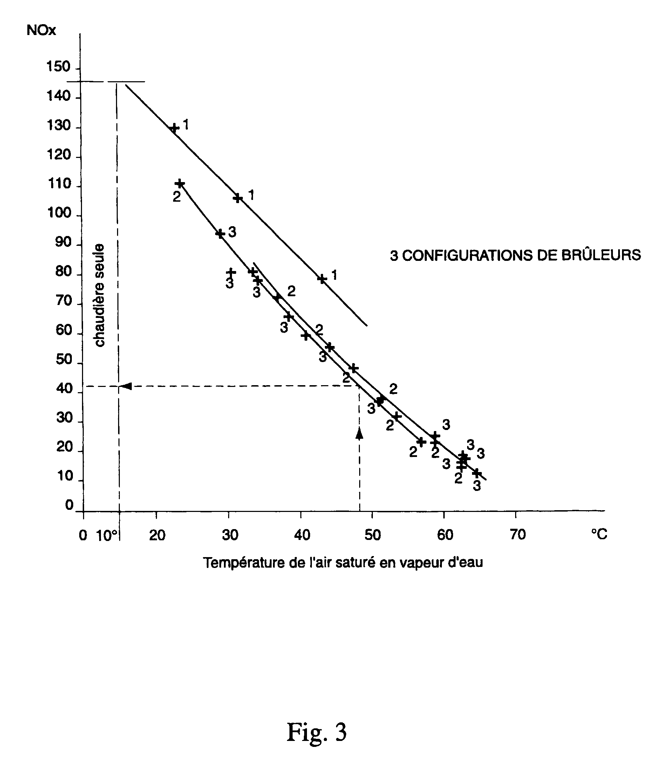

L'impact sur l'environnement est également positif, ce qui représente un avantage déterminant du système, ainsi qu'en témoigne notamment la figure 3.

La courbe la plus haute illustre le taux d'oxyde d'azote lorsqu'il n'y a pas d'échangeur du type de celui de l'invention associé à la chaudière (C). Notamment aux basses températures de l'air saturé, ledit taux est élevé (130 à 140 mg d'oxyde d'azote par m³).

A l'inverse, lorsque le système de l'invention est installé, ce taux diminue fortement : 100 à 110 mg/m³ ou 80 à 90 mg/m³, aux basses températures de l'air saturé, pour deux configurations distinctes de brûleurs dans la chaudière (C).

L'exemple de configuration de l'invention donné ci-dessus n'est bien entendu qu'illustratif, et ne peut être considéré comme exhaustif de ladite invention. Cette dernière recouvre au contraire toutes les variantes de forme et d'agencement à la portée de l'homme de l'art.

## Revendications

1. Echangeur massique et thermique (A) entre deux phases gazeuses de température et d'humidité différentes, une première phase froide et peu humide et une seconde phase chaude et humide, permettant le réchauffement et l'humidification de ladite première phase, et à l'inverse le refroidissement et l'assèchement de la seconde phase dans un compartiment dans lequel les flux gazeux correspondant auxdites phases circulent en étant séparés par des parois poreuses réalisant l'échange de chaleur total, caractérisé en ce que le compartiment (6) comporte au moins deux zones d'échange massique et thermique (Z₁₁ à Z₃₃) dans lesquelles des conduits (2, 3) véhiculant les phases gazeuses sont orientés perpendiculairement, les flux y circulant en sens inverse de sorte que le dernier échange de chacune des phases s'effectue au niveau du premier échange de l'autre phase.

2. Echangeur massique et thermique (A) entre deux phases gazeuses de température et d'humidité différentes selon la revendication précédente, caractérisé en ce que chaque conduit (2, 3) véhiculant une phase gazeuse comporte au moins deux tronçons parallèles.

3. Echangeur massique et thermique (A) entre deux phases gazeuses de température et d'humidité différentes selon une quelconque des revendications précédentes, caractérisé en ce que chaque conduit (2, 3) véhiculant une phase gazeuse comporte trois tronçons parallèles.

4. Echangeur massique et thermique (A) entre deux phases gazeuses de température et d'humidité différentes selon l'une quelconque des revendications précédentes, caractérisé en ce que le flux le plus froid est véhiculé dans des conduites traversées par une pluralité de tubulures (10) poreuses parallèles entre elles véhiculant le flux le plus chaud, lesdites tubulures (10) n'étant pas au contact l'une de l'autre.

5. Echangeur massique et thermique (A) entre deux phases gazeuses de température et d'humidité différentes selon la revendication précédente, caractérisé en ce que lesdites tubulures (10) poreuses sont en céramique d'oxyde d'alumine, de carbure ou de nitrure d'oxyde métallique.

6. Echangeur massique et thermique (A) entre deux phases gazeuses de température et d'humidité différentes selon la revendication précédente, caractérisé en ce que la porosité de la céramique est comprise entre 5 et 60 cm³/gr, de préférence entre 35 et 50 cm³/gr.

7. Echangeur massique et thermique (A) entre deux phases gazeuses de température et d'humidité différentes selon l'une des revendications 5 et 6, caractérisé en ce que la céramique est composée en granulométrie de grains fins de 0,05 à 5 µm et de préférence de 1 à 2 µm, et de grains plus gros composant le "squelette" de granulométrie de 15 à 200 µm, et de préférence de 15 à 30 µm.

8. Echangeur massique et thermique (A) entre deux phases gazeuses de température et d'humidité différentes selon la revendication précédente, caractérisé en ce que le rayon des pores est compris entre 1 et 15 µm, de préférence entre 2 et 5 µm.

9. Echangeur massique et thermique (A) entre deux phases gazeuses de température et d'humidité différentes selon l'une des revendications 4 à 8, caractérisé en ce que chaque tubulure (10) poreuse est équipée d'un dispositif permettant de plaquer la phase gazeuse en circulation contre les parois de la tubulure (10).

10. Echangeur massique et thermique (A) entre deux phases gazeuses de température et d'humidité différentes selon la revendication précédente, caractérisé en ce que ledit dispositif est constitué d'une vis sans fin équipant les tronçons rectilignes des tubulures (10).

11. Echangeur massique et thermique (A) entre deux phases gazeuses de température et d'humidité différentes selon la revendication précédente, caractérisé en ce que lesdites vis sans fin sont en acier inoxydable.

12. Echangeur massique et thermique (A) entre deux phases gazeuses de température et d'humidité différentes selon l'une des revendications 4 à 11, caractérisé en ce que l'épaisseur des parois des tubulures (10) est égale à au moins 5 mm.

13. Echangeur massique et thermique (A) entre deux phases gazeuses de température et d'humidité différentes selon l'une des revendications 4 à 12, caractérisé en ce que diamètre moyen extérieur des tubulures (10) est de 45 mm, leur diamètre moyen intérieur est de 35 mm, et la flèche maximale autorisée est de 3 mm.

14. Echangeur massique et thermique (A) entre deux phases gazeuses de température et d'humidité différentes selon l'une des revendications précédentes, caractérisé en ce que l'entrée (4) du conduit (2) véhiculant la phase froide et peu humide est munie d'un filtre (1) et d'une grille.

15. Echangeur massique et thermique (A) entre deux phases gazeuses de température et d'humidité différentes selon l'une quelconque des revendications précédentes, caractérisé en ce que le compartiment est constitué d'un bâti (6) parallélépipédique divisé en n portions rectilignes de section sensiblement égale par des cloisons internes (7, 8) laissant subsister un passage entre les conduits adjacents, localisé alternativement à l'une et l'autre des extrémités desdites cloisons, ledit bâti (6) comportant des ouvertures (5), aux extrémités opposées audits passages, dans les deux portions rectilignes latérales, l'ensemble constituant le conduit (2) véhiculant la phase gazeuse froide et peu humide.

16. Echangeur massique et thermique (A) entre deux phases gazeuses de température et d'humidité différentes selon la revendication précédente, caractérisé en ce que les tubulures (10) rectilignes sont fixées dans les parois internes (7, 8), les tubulures (10) de deux tronçons adjacents étant raccordées par des pièces en U (11) démontable.

17. Echangeur massique et thermique (A) entre deux phases gazeuses de température et d'humidité différentes selon la revendication précédente, caractérisé en ce que lesdites pièces (11) en U sont en PVC.

18. Echangeur massique et thermique (A) entre deux phases gazeuses de température et d'humidité différentes selon l'une des revendications précédentes, caractérisé en ce que le bâti (6) comporte un couvercle permettant le démontage des tubulures (10).

19. Echangeur (A) selon l'une quelconque des revendications 15 à 17, caractérisé en ce que la première phase gazeuse est constituée d'air sec et froid, initialement à environ 10 à 20° C avec de l'ordre de 4 à 5 g de vapeur d'eau par Nm³, la seconde phase gazeuse ayant une température de l'ordre de 60° C et étant saturée en humidité.

20. Echangeur (A) selon la revendication précédente, caractérisé en ce que la vitesse du flux de la première phase gazeuse est comprise entre 2,5 et 3,5 m/s, et la vitesse du flux de la seconde phase gazeuse est comprise entre 2,5 et 7 m/s.

21. Echangeur (A) selon la revendication précédente, caractérisé en ce qu'il est utilisé couplé avec une chaudière (C), l'air comburant correspondant à la première phase gazeuse en sortie de l'échangeur (A), et la seconde phase gazeuse correspondant aux fumées obtenues en sortie de la chaudière (C), saturées d'humidité via un condenseur (B).

22. Echangeur (A) selon la revendication précédente, caractérisé en ce qu'il comporte, pour une chaudière (C) de 1MW, 56 tubulures (10) poreuses ayant une longueur de 82 cm.
